# EUROPÄISCHE PATENTSCHRIFT

(11) **EP 4 237 156 B1**
(45) Veröffentlichungstag und Bekanntmachung des Hinweises auf die Patenterteilung: **06.12.2023**
(21) Anmeldenummer: 21798717.1
(22) Anmeldetag: 27.10.2021
(51) Int. Cl.: E02B 1/00, B03D 1/14, C02F 1/52, C02F 103/00, C02F 1/24

(54) **MIKROFLOTATIONSANLAGE ZUR BEHANDLUNG EINES GEWÄSSERS**
MICROFLOTATION SYSTEM FOR TREATING A BODY OF WATER
INSTALLATION DE MICROFLOTATION DESTINÉE AU TRAITEMENT DES EAUX

(30) Priorität: 02.11.2020 EP 20205159
(43) Veröffentlichungstag der Anmeldung: 06.09.2023
(73) Patentinhaber: Damann, Volker, 33165 Lichtenau-Henglarn (DE); Damann, Roland, 33106 Paderborn (DE)
(72) Erfinder: DAMANN, Roland, 33106 Paderborn (DE)
(74) Vertreter: Hauck Patentanwaltspartnerschaft mbB
(86) Internationale Anmeldenummer: PCT/EP2021/079870
(87) Internationale Veröffentlichungsnummer: WO 2022/090336

(56) Entgegenhaltungen:
- WO-A1-2017/146339
- DE-A1- 3 733 583
- DE-A1-102010 026 168
- DE-T2- 69 003 470

## Beschreibung

Die Erfindung betrifft eine Mikroflotationsanlage zur Behandlung eines Gewässers.

Mikroflotationsanlage werden in erster Linie zur Behandlung industrieller Abwässer eingesetzt. Diese Mikroflotationsanlagen weisen ein Flotationsbecken auf, in das das zu behandelnde Abwasser eingeleitet wird. Innerhalb des Flotationsbeckens werden Mikroblasen erzeugt, die sich an Verunreinigungen anlagern und gemeinsam mit diesen langsam zur Oberfläche aufsteigen. Gegebenenfalls kann ein Flockungsmittel zugesetzt werden. Der sich an der Oberfläche bildende Schaum kann einfach abgesaugt oder abgeschöpft werden. Zur Erzeugung der Mikroblasen wird ein Teil des bereits behandelten Abwassers unter erhöhtem Druck mit einem Gas angereichert, das sich idealerweise bis zum Erreichen einer Sättigungskonzentration löst. Dieses Druckwasser gelangt über eine Leitung zu einem Entspannungsventil, wo eine schlagartige Druckentspannung eintritt. Infolge dieser Druckentspannung entstehen unzählige Mikroblasen mit einer idealerweise relativ gleichmäßigen Größe im Bereich von ca. 30 µm bis ca. 50 µm.

Zur Behandlung eines Gewässers ist es bekannt, eine solche Mikroflotationsanlage am Ufer des Gewässers zu errichten und das zu behandelnde Wasser aus dem Gewässer in das Flotationsbecken zu leiten. Ein Beispiel, bei dem es speziell um die Verringerung des Phosphatgehalts eines Gewässers geht und bei dem das Flotationsbecken in einem Container untergebracht ist, ist in der Druckschrift DE 44 33 634 C2 beschrieben. Die bewährte Mikroflotationstechnik ist für einen solchen Einsatz ohne weiteres geeignet, das Errichten der Mikroflotationsanlage am Ufer nebst den benötigten Leitungen ist jedoch aufwendig und wenig flexibel.

Aus der Druckschrift DE 10 2010 026 168 A1 ist eine an Bord eines Schiffs befindliche Mikroflotationsanlage bekannt geworden, bei der mehrere Entspannungsven tile unter der Wasseroberfläche in dem Gewässer angeordnet sind. Die Mikroblasen sollen hinter dem Schiff aufsteigen, und mit einer speziellen Fördereinrichtung soll das an der Wasseroberfläche entstehende Flotat in das Schiff gefördert werden.

Aus der Druckschrift EP 3 647 272 A1 ist eine Mikroflotationsanlage bekannt geworden, die einen Schwimmkörper aufweist und an der Oberfläche eines Gewässers schwimmend angeordnet werden kann. Eine Reihe von Entspannungsventilen ist unterhalb der Wasseroberfläche angeordnet. Nahe der Wasseroberfläche befindet sich eine Barriere, innerhalb der das Flotat gesammelt werden kann. Aus der Druckschrift DE 10 2010 026 168 A1 ist eine ähnliche Anlage bekannt geworden, die auf einem Gewässer schwimmt und von einem Schiff gezogen wird.

Aus der Druckschrift DE 37 33 583 A1 ist eine Vorrichtung zur Erzeugung von Mikroblasen aus druckbegasten Flüssigkeiten bekannt geworden, die als Entspannungsorgan eine Hohlkegeldüse und eine stromabwärts davon angeordnete Abdeckplatte aufweist.

Aus der Druckschrift DE 690 03 470 T2 ist eine Mikroflotationsanlage mit den Merkmalen des Oberbegriffs des Anspruchs 1 bekannt geworden.

Davon ausgehend ist es die Aufgabe der Erfindung, eine Mikroflotationsanlage zur Behandlung eines Gewässers zur Verfügung zu stellen, die eine effizientere Erzeugung von Mikroblasen ermöglicht.

Diese Aufgabe wird gelöst durch die Mikroflotationsanlage zur Behandlung eines Gewässers mit den Merkmalen des Anspruchs 1. Die Mikroflotationsanlage weist folgendes auf:
- eine Einrichtung zur Erzeugung von Druckwasser,
- ein Entspannungsventil, das in einer vorgegebenen Wassertiefe angeordnet ist,
- eine Druckwasserleitung, die die Einrichtung zur Erzeugung von Druckwasser mit dem Entspannungsventil verbindet,
- eine Tragstruktur, die mit einem Schwimmkörper verbunden ist und das Entspannungsventil in einer vorgegebenen Wassertiefe hält, wobei die Mikroflotationsanlage zur Behandlung eines Gewässers bestimmt ist, und wobei
- eine stromabwärts des Entspannungsventils angeordnete Mikroblasenstabilisierungszone durch eine Bodenwand und eine damit verbundene, umlaufende Seitenwand von dem umgebenden Gewässer abgegrenzt ist.

Die Einrichtung zur Erzeugung von Druckwasser kann einen Druckbehälter mit einer Zulaufleitung für Wasser und einer Zuführleitung für Gas, insbesondere Luft, aufweisen. In der Zulaufleitung kann eine Pumpe angeordnet sein. Ein freies Ende der Zulaufleitung kann unterhalb der Wasseroberfläche des Gewässers angeordnet sein. In der Zuführleitung für das Gas kann insbesondere ein Kompressor angeordnet sein. In dem Druckbehälter werden das Wasser und das Gas miteinander vermischt. Das Gas löst sich unter erhöhtem Druck in dem Wasser, vorzugsweise bis eine Sättigung erreicht oder fast erreicht ist.

Als Alternative zur Verwendung einer Zuführleitung für das Gas, die in den Druckbehälter mündet, kann in der Zulaufleitung für Druckwasser ein Venturi-Injektor angeordnet werden, mit dem Luft aus der Umgebung angesaugt wird. In diesem Fall kommt es bereits in der Zulaufleitung zu einer Durchmischung von Wasser und Gas. Über die Druckwasserleitung kann das erzeugte Druckwasser dem Druckbehälter entnommen und zu dem Entspannungsventil geleitet werden. Das Entspannungsventil befindet sich in einer vorgegebenen Wassertiefe und weist mindestens eine Austrittsöffnung auf, aus der das Druckwasser austritt. Während das Druckwasser das Entspannungsventil durchströmt, baut sich der Druck von dem in der Druckwasserleitung vor dem Entspannungsventils herrschenden Überdruck hin zu dem in der Umgebung der Austrittsöffnung bestehenden Umgebungsdruck (der von der Wassertiefe abhängig ist) ab. Bei diesem Druckentspannungsprozess bildet sich eine Vielzahl von Gasblasen.

Die Tragstruktur hält das Entspannungsventil in einer vorgegebenen Wassertiefe.

Sie ist an einem Schwimmkörper der Mikroflotationsanlage befestigt sein und sich von dort bis in die gewünschte Wassertiefe hinab erstrecken. Alternativ kann die Tragstruktur auch am Grund des Gewässers angeordnet sein und sich von dort nach oben bis in die gewünschte Wassertiefe erstrecken. Die vorgegebene Wassertiefe kann entsprechend den jeweiligen Anforderungen gewählt werden. Insbesondere kann die Tragstruktur einen Verstellmechanismus zum Fixieren des Entspannungsventils in unterschiedlichen Wassertiefen aufweisen.

Die Erfindung beruht auf der Erkenntnis, dass der skizzierte Druckentspannungsprozess bei Anordnung des Entspannungsventils in einem freien Gewässer wenig effektiv ist. Insbesondere wurde beobachtet, dass sich in Relation zur eingeleiteten Druckwassermenge in vielen Fällen nur sehr wenige Mikroblasen bilden. Es wird vermutet, dass die Ursache dieser geringen Effizienz in dem hohen Konzentrationsgefälle liegt. Durch die geringe Konzentration des in dem umgebenden Wasser des Gewässers gelösten Gases wird ein Großteil der sich bei der Druckentspannung bildenden, mikroskopisch kleinen Gasblasen unmittelbar in dem Wasser gelöst. Dies scheint so schnell zu erfolgen, dass sich keine stabilen Mikroblasen oder nur wenige davon ausbilden. Im Gegensatz zu einer herkömmlichen Mikroflotationsanlage, bei der das Druckwasser in ein relativ kleines Flotationsbecken eingeleitet wird, kann der Wasserkörper des Gewässers große Mengen des Gases aufnehmen. Auch kommt es zu einer stärkeren Durchmischung, weil größere Wassermengen im ständigen Austausch mit dem Wasser in der Umgebung des Entspannungsventils sind.

Bei der Erfindung wird dem übermäßigen Konzentrationsgefälle durch eine Mikroblasenstabilisierungszone entgegengewirkt. Diese Mikroblasenstabilisierungszone ist stromabwärts des Entspannungsventils angeordnet, so dass das Gas-/Wassergemisch nach dem Durchlaufen des Entspannungsventils in die Mikroblasenstabilisierungszone einströmt. Die Mikroblasenstabilisierungszone zeichnet sich dadurch aus, dass sie durch eine Bodenwand und eine damit verbundene, umlaufende Seitenwand von dem umgebenden Gewässer abgegrenzt ist. Das in der Mikroblasenstabilisierungszone befindliche Wasser steht zwar im ständigen Austausch mit dem umgebenden Gewässer, insbesondere weil die Mikroblasenstabilisierungszone nach oben hin in der Regel offen ist, der Austausch wird durch die genannten Wände jedoch stark eingeschränkt, und zwar sowohl mit Blick auf Diffusions- als auch auf Strömungsprozesse. Dadurch stellt sich in der Mikroblasenstabilisierungszone schnell eine Konzentration des gelösten Gases ein, die höher ist als im umgebenden Gewässer. Die bei der Druckentspannung entstehenden, mikroskopisch kleinen Gasblasen werden daher in einem geringeren Maß in dem umgebenden Wasser gelöst. Dadurch besteht hinreichend Zeit zur Ausbildung stabiler Mikroblasen, die idealerweise zu einem Großteil Durchmesser im Bereich von 20 µm bis 60 µm aufweisen, insbesondere im Bereich von 30 µm bis 50 µm. Mikroblasen dieser Größe sind aufgrund ihres hohen Innendrucks und ihres im Vergleich zur Oberfläche großen Volumens (in Relation zu den ursprünglich entstehenden, mikroskopisch kleinen Gasbläschen) für eine Lösung in der umgebenden Flüssigkeit relativ unempfindlich. Strömen diese Mikroblasen aus der Mikroblasenstabilisierungszone aus, insbesondere, indem sie langsam nach oben aufsteigen, können sie sich daher wie gewünscht an Verunreinigungen aller Art in dem Gewässer anlagern und diese langsam an die Wasseroberfläche befördern.

Bodenwand und Seitenwand grenzen die Mikroblasenstabilisierungszone von dem umgebenden Wasser ab, insbesondere können sie hierzu einen nach oben hin offenen, topfartigen Behälter bilden. Weder zu den Seiten, noch zum Boden hin muss diese Abgrenzung jedoch vollständig sein, da ein gewisser Austausch mit dem umgebenden Gewässer akzeptabel sein kann.

In einer Ausgestaltung weist die Mikroblasenstabilisierungszone einen Durchmesser auf, der das Zehnfache eines Innendurchmessers der Druckwasserleitung oder mehr beträgt. Beispielsweise kann der Durchmesser der Mikroblasenstabilisierungszone im Bereich von etwa 10 cm bis etwa 100 cm liegen. Die Höhe der Mikroblasenstabilisierungszone, die der Höhe der Seitenwand bzw. dem Abstand zwischen der Bodenwand und dem oberen Rand der Seitenwand entsprechen kann, kann ebenfalls im Bereich von etwa 10 cm bis etwa 100 cm liegen. Versuche haben ergeben, dass bei Verwendung einer Mikroblasenstabilisierungszone der genannten Größe eine besonders effiziente Mikroblasenerzeugung gelingt. Es versteht sich, dass die Mikroflotationsanlage mehrere Entspannungsventile aufweisen kann. In diesem Fall kann jedem Entspannungsventil eine eigene Mikroblasenstabilisierungszone mit Bodenwand und Seitenwand zugeordnet sein. Ebenfalls möglich ist es, mehrere Entspannungsventile innerhalb einer gemeinsamen Mikroblasenstabilisierungszone anzuordnen. In diesem Fall kann die Verwendung einer größeren Mikroblasenstabilisierungszone vorteilhaft sein.

In einer Ausgestaltung weist die Seitenwand einen oberen Rand auf, der in einer vorgegebenen Wassertiefe oberhalb des Entspannungsventils angeordnet ist. Somit kann oberhalb der Mikroblasenstabilisierungszone ein fortlaufender Austausch mit dem umgebenden Wasserkörper erfolgen.

In einer Ausgestaltung weist das Entspannungsventil eine Austrittsöffnung auf, die an einer Oberseite der Bodenwand angeordnet ist. Insbesondere kann die Austrittsöffnung in der Mitte der Bodenwand angeordnet sein. Bei dieser Austrittsöffnung kann es sich um einen Ventilspalt des Entspannungsventils handeln. Bauartbedingt befindet sich der Ventilspalt des Entspannungsventils jedoch häufig im Inneren eines Gehäuses des Entspannungsventils, und es schließt sich ein kurzer Leitungsabschnitt innerhalb des Entspannungsventilgehäuses an, der bis zu der Austrittsöffnung führt. Idealerweise sollte das ausströmende Gas-/Wassergemisch möglichst unmittelbar nach dem Passieren des Ventilspalts in die Mikroblasenstabilisierungszone einströmen. Eine Anordnung der Austrittsöffnung (unmittelbar) an einer Oberseite der Bodenwand oder in der Bodenwand selbst ist hierfür besonders vorteilhaft.

In einer Ausgestaltung ist in der Bodenwand und/oder in der Seitenwand mindestens eine Zulauföffnung ausgebildet, durch die Wasser aus dem Wasserkörper in die Mikroblasenstabilisierungszone einströmen kann. Ein maßvoller Zustrom von verunreinigtem Wasser durch die Zulauföffnung in die Mikroblasenstabilisierungszone kann sinnvoll sein, damit sich die einmal stabil gebildeten Mikroblasen frühzeitig an Verunreinigungen anlagern können. Die Zulauföffnung sollte jedoch so bemessen sein, dass im Verhältnis zum Volumenstrom des in die Mikroblasenstabilisierungszone eingeleiteten Gas-/Wassergemischs nur wenig Umgebungswasser zuströmt. Beispielsweise kann die mindestens eine Zulauföffnung so bemessen sein, dass etwa dieselbe Menge Umgebungswasser einströmt, wie Gas-/Wassergemisch durch die Austrittsöffnung des Entspannungsventils. Anderenfalls können die geschilderten, vorteilhaften Wirkungen der Abgrenzung der Mikroblasenstabilisierungszone nicht oder nicht in optimalem Maß erreicht werden.

In einer Ausgestaltung sind mehrere der Zulauföffnungen in der Bodenwand ausgebildet. Hierdurch kann das Ausbilden einer insgesamt von unten nach oben führenden Strömung begünstigt werden.

In einer Ausgestaltung ist eine Größe der mindestens einen Zulauföffnung und/oder eine Anzahl geöffneter Zulauföffnungen einstellbar. Dadurch kann der durch die Zulauföffnung erfolgende Zustrom von Umgebungswasser auf die eingeleitete Druckwassermenge abgestimmt werden.

In einer Ausgestaltung ist in der Mikroblasenstabilisierungszone oberhalb der Bodenwand eine Prallplatte angeordnet. Die Prallplatte kann insbesondere parallel zu der Bodenwand ausgerichtet sein. Die Prallplatte kann zur Ausbildung einer "inneren Teilzone" in der Mikroblasenstabilisierungszone führen, die zwischen Bodenwand und Prallplatte angeordnet ist. In dieser inneren Teilzone stellt sich noch schneller eine hohe Konzentration des gelösten Gases ein, wodurch die Effizienz der Mikroblasenbildung nochmals gesteigert werden kann. Zugleich kann die Prallplatte ein zu schnelles Aufsteigen der Mikroblasen verhindern.

In einer Ausgestaltung beträgt ein Abstand zwischen der Prallplatte und der Bodenwand 50 % oder weniger von einer Höhe der Seitenwand. Versuche haben ergeben, dass dies für eine effiziente Mikroblasenerzeugung hilfreich ist.

Die Mikroflotationsanlage weist einen Schwimmkörper auf, der mit der Tragstruktur verbunden ist, sodass die Mikroflotationsanlage schwimmend einsetzbar ist. Insbesondere kann sie so an der Oberfläche des Gewässers treiben, also frei schwimmen. Sie kann jedoch auch in einer bestimmten Position gehalten oder wahlweise mit einem Antrieb verfahren werden.

In einer Ausgestaltung weist die Mikroflotationsanlage einen Wasserstoffspeicher und eine wasserstoffbetriebene Brennstoffzelle auf. Auf diese Weise kann der Energiebedarf der Mikroflotationsanlage (im Wesentlichen kontinuierlich erforderliche elektrische Leistung zum Betrieb der Einrichtung zum Erzeugen des Druckwassers) auf umweltverträgliche Weise bereitgestellt werden. Verunreinigungen des Gewässers beispielsweise durch auslaufenden Kraftstoff bei Verwendung eines Dieselaggregats können gar nicht erst auftreten.

In einer Ausgestaltung ist der Wasserstoffspeicher in dem Schwimmkörper angeordnet bzw. bildet diesen. Wasserstoffspeicher sind zur Verwendung an Bord von Schiffen in seewasserfesten Ausführungen erhältlich. Wegen der geringen spezifischen Dichte des darin gespeicherten Wasserstoffs sind derartige Wasserstoffspeicher ideal als Schwimmkörper geeignet.

In einer Ausgestaltung ist das Gewässer ein natürliches Gewässer, insbesondere ein See, ein Fluss oder ein Meer. Für natürliche Gewässer ist der Einsatz einer schwimmenden Mikroflotationsanlage ideal, weil kein bleibender Eingriff in das in vielen Fällen empfindliche Ökosystem erforderlich ist. Insbesondere Ufer und Grund des Gewässers können weitestgehend unberührt bleiben.

In einer Ausgestaltung ist das Gewässer ein künstlich angelegtes Gewässer, insbesondere ein Teich, ein Kanal oder ein Rückhaltebecken für Regen oder Hochwasser. Die Wasserkörper der genannten künstlichen Gewässer weisen typischerweise sehr große Volumina von beispielsweise 1.000 m³ oder mehr auf, was die erfindungsgemäße Ausbildung einer Mikroblasenstabilisierungszone erforderlich macht.

In einer Ausgestaltung weist die Mikroflotationsanlage ein Positionsüberwachungssystem und einen Fahrantrieb sowie eine mit beiden verbundene Steuerung auf, die dazu ausgebildet ist, die Mikroflotationsanlage für einen ersten vorgegebenen Zeitraum an einer ersten Position zu halten, anschließend an eine zweite Position zu bewegen und dort für einen zweiten vorgegebenen Zeitraum zu halten. Das Positionsüberwachungssystem kann insbesondere ein Satellitennavigationssystem wie GPS sein. Der Fahrantrieb kann insbesondere ein elektrischer Fahrantrieb mit einem unter Wasser angeordneten Propeller sein. Bei einem Fließgewässer können die erste Position und die zweite Position relativ zu dem strömenden Wasser zu verstehen sein. In diesem Fall treibt die Mikroflotationsanlage während des ersten vorgegebenen Zeitraums mit dem fließenden Gewässer mit, um anschließend an eine andere Position bewegt zu werden. Bei einem stationären Gewässer können die erste und zweite Position relativ zu einem Grund des Gewässers bestimmt werden. In beiden Fällen wird während der jeweils vorgegebenen Zeiträume ein bestimmtes Teilvolumen des Wasserkörpers gereinigt. Es wird also in beiden Fällen (Fließgewässer oder stehendes Gewässer) ein quasi stationärer Betrieb erreicht, bei dem bestimmte Teilvolumina des Wasserkörpers für vorgegebene Zeiten behandelt werden.

Nachfolgend wird die Erfindung anhand eines in einer Figur dargestellten Ausführungsbeispiels näher erläutert.

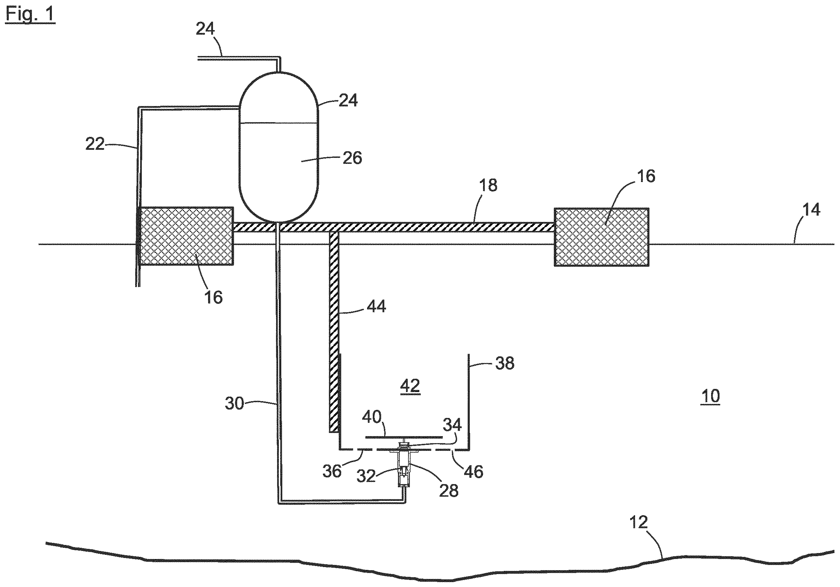

- Fig. 1: zeigt eine Mikroflotationsanlagen einer schematischen Darstellung.

Die Mikroflotationsanlage aus Figur 1 ist auf einem natürlichen Gewässer schwimmend angeordnet. Das Gewässer weist einen Wasserkörper 10, ein Gewässerbett 12 und eine Wasseroberfläche 14 auf.

Die Mikroflotationsanlage weist zwei Schwimmkörper 16 und eine Tragstruktur 18 auf, die die Schwimmkörper 16 miteinander verbindet, sodass die gesamte Mikroflotationsanlage auf der Wasseroberfläche 14 schwimmfähig ist. Eine Einrichtung zum Erzeugen von Druckwasser umfasst einen Druckbehälter 20, dem fortlaufend über eine Zulaufleitung 22, deren freies Ende unterhalb der Wasseroberfläche 14 angeordnet ist, Wasser aus dem Wasserkörper 10 zugeführt werden kann. Hierzu kann in der Zulaufleitung 22 eine nicht dargestellte Pumpe angeordnet sein. Außerdem mündet eine nur andeutungsweise dargestellte Gasleitung 24 in den Druckbehälter 20. In dieser Gasleitung 24 kann ein nicht dargestellter Kompressor angeordnet sein. Über die Gasleitung 24 kann dem Druckbehälter 20 fortlaufend Luft zugeführt werden. In dem Druckbehälter 20 herrscht ein erhöhter Druck, beispielsweise im Bereich von 2 bar bis 10 bar, was zu einer Lösung der in der Luft enthaltenen Gase in dem Wasser führt. Das entstehende Druckwasser 26 ist idealerweise bis zu einer Sättigungskonzentration mit den in der Luft enthaltenen Gasen angereichert.

Unterhalb der Wasseroberfläche 14 ist ein Entspannungsventil 28 angeordnet. Das Entspannungsventil 32 ist über einen nach unten weisenden Abschnitt 44 der Tragstruktur, der mit der Seitenwand 38 und über diese mit der Bodenwand 36 verbunden ist, in einer vorgegebenen Wassertiefe gehalten. Das Entspannungsventil 28 ist über eine Druckwasserleitung 30 mit dem Druckbehälter 26 verbunden. Innerhalb des Entspannungsventils 28 befindet sich ein Ventilspalt 32, an dem der erläuterte Druckentspannungsprozess stattfindet. Der Ventilspalt 32 befindet sich bei dem beispielhaft dargestellten Entspannungsventil 28 bauartbedingt etwa in der Mitte eines Ventilgehäuses. An einem oberen Ende weist das Ventilgehäuse des Entspannungsventils 28 mehrere Austrittsöffnungen 34 auf, an denen das Gas-/Wassergemisch kurz nach der Entspannung aus dem Gehäuse des Entspannungsventils 28 ausströmt.

Die Austrittsöffnungen 34 des Entspannungsventils 28 befinden sich unmittelbar oberhalb einer Bodenplatte 36, die horizontal angeordnet ist und in deren Mitte das Entspannungsventil 28 angeordnet ist. Der Rand der Bodenplatte 36 ist mit einer umlaufenden Seitenwand 38, die vertikal ausgerichtet ist, verbunden. Die Bodenwand 36 mit der Seitenwand 38 grenzt eine in ihrem Inneren angeordnete Mikroblasenstabilisierungszone 42 von dem umgebenden Wasserkörper 10 ab. Oberhalb der Bodenplatte 36 und parallel dazu ist eine Prallplatte 40 angeordnet, die sich in einem relativ geringen Abstand von der Bodenwand 36 befindet. Ihr Durchmesser beträgt etwa die Hälfte eines Durchmessers der Bodenwand 36, sodass seitlich der Prallplatte 40 ein relativ breiter, kreisscheibenförmiger Durchgang gebildet ist.

Unmittelbar nach dem Passieren des Ventilspalts 32 bilden sich in dem Druckwasser 26 mikroskopisch kleine Gasblasen aus. Das Gas-/Wassergemisch strömt durch die Austrittsöffnungen 34 schnell in die Mikroblasenstabilisierungszone 42 ein, wo sich beginnend in dem Bereich zwischen Bodenwand 36 und Prallplatte 40 stabile Mikroblasen ausbilden. Dieser Prozess hält während des langsamen Aufsteigens durch die Mikroblasenstabilisierungszone 42 an, sodass auf Höhe des oberen Rands der Seitenwand 38 eine Vielzahl stabiler Mikroblasen zur Verfügung stehen, die weiter nach oben zur Wasseroberfläche 14 hin aufsteigen und sich dabei an im Wasserkörper 10 vorhandene Verunreinigungen anlagern und diese mit zur Wasseroberfläche 14 tragen. Das dort ausgebildete Flotat kann einfach entfernt werden, beispielsweise mithilfe einer Fördereinrichtung und/oder durch Absaugen an der Wasseroberfläche 14.

Mutmaßlich erlangt die Mikroblasenstabilisierungszone ihre förderliche Wirkung auf die Ausbildung stabiler Mikroblasen durch die Verringerung des Konzentrationsgefälles der gelösten Gase in der Umgebung des Entspannungsventils. Beispielsweise kann die Konzentration des gelösten Sauerstoffs in dem Wasserkörper im Bereich von etwa 7 mg/l liegen. In der Mikroblasenstabilisierungszone stellt sich schnell eine höhere Konzentration von zum Beispiel etwa 25 mg/l ein.

### Liste der Bezugszeichen

- 10: Wasserkörper
- 12: Gewässerbett
- 14: Wasseroberfläche
- 16: Schwimmkörper
- 18: Tragstruktur
- 20: Druckbehälter
- 22: Zulaufleitung
- 24: Gasleitung
- 26: Druckwasser
- 28: Entspannungsventil
- 30: Druckwasserleitung
- 32: Ventilspalt
- 34: Austrittsöffnung
- 36: Bodenwand
- 38: Seitenwand
- 40: Prallplatte
- 42: Mikroblasenstabilisierungszone
- 44: Abschnitt der Tragstruktur
- 46: Zulauföffnung

## Patentansprüche

1. Mikroflotationsanlage mit:
• einer Einrichtung zur Erzeugung von Druckwasser (26),
• einem Entspannungsventil (28), das in einer vorgegebenen Wassertiefe angeordnet ist,
• einer Druckwasserleitung (30), die die Einrichtung zur Erzeugung von Druckwasser (26) mit dem Entspannungsventil (28) verbindet,
• einem Schwimmkörper (16), und
• einer Tragstruktur (18), die mit dem Schwimmkörper verbunden ist und das Entspannungsventil (28) in einer vorgegebenen Wassertiefe hält, wobei
• die Mikroflotationsanlage zur Behandlung eines Gewässers bestimmt ist, **dadurch gekennzeichnet, dass**
• die Mikroflotationsanlage eine stromabwärts des Entspannungsventils (28) angeordnete Mikroblasenstabilisierungszone (42) aufweist, die durch eine Bodenwand (36) und eine damit verbundene, umlaufende Seitenwand (38) von dem umgebenden Gewässer abgegrenzt ist.

2. Mikroflotationsanlage nach Anspruch 1, **dadurch gekennzeichnet, dass** die Mikroblasenstabilisierungszone (42) einen Durchmesser aufweist, der das zehnfache eines Innendurchmessers der Druckwasserleitung (30) oder mehr beträgt.

3. Mikroflotationsanlage nach Anspruch 1 oder 2, **dadurch gekennzeichnet, dass** die Seitenwand (38) einen oberen Rand aufweisen, der in einer vorgegebenen Wassertiefe oberhalb des Entspannungsventils (28) angeordnet ist.

4. Mikroflotationsanlage nach einem der Ansprüche 1 bis 3, **dadurch gekennzeichnet, dass** das Entspannungsventil (28) eine Austrittsöffnung (34) aufweist, die an einer Oberseite der Bodenwand (36) angeordnet ist.

5. Mikroflotationsanlage nach einem der Ansprüche 1 bis 4, **dadurch gekennzeichnet, dass** in der Bodenwand (36) und/oder in der Seitenwand (38) mindestens eine Zulauföffnung (46) ausgebildet ist, durch die Wasser in die Mikroblasenstabilisierungszone (42) einströmen kann.

6. Mikroflotationsanlage nach Anspruch 5, **dadurch gekennzeichnet, dass** mehrere der Zulauföffnungen (46) in der Bodenwand (36) ausgebildet sind.

7. Mikroflotationsanlage nach Anspruch 5 oder 6, **dadurch gekennzeichnet, dass** eine Größe der mindestens einen Zulauföffnung (46) und/oder eine Anzahl geöffneter Zulauföffnungen (46) einstellbar ist.

8. Mikroflotationsanlage nach einem der Ansprüche 1 bis 7, **dadurch gekennzeichnet, dass** in der Mikroblasenstabilisierungszone (42) oberhalb der Bodenwand (36) eine Prallplatte (40) angeordnet ist.

9. Mikroflotationsanlage nach Anspruch 8, **dadurch gekennzeichnet, dass** ein Abstand zwischen der Prallplatte (40) und der Bodenwand (36) 50 % oder weniger von einer Höhe der Seitenwand (38) beträgt.

10. Mikroflotationsanlage nach einem der Ansprüche 1 bis 9, **dadurch gekennzeichnet, dass** das Gewässer ein natürliches Gewässer ist, insbesondere ein See, ein Fluss oder ein Meer.

11. Mikroflotationsanlage nach einem der Ansprüche 1 bis 9, **dadurch gekennzeichnet, dass** das Gewässer ein künstlich angelegtes Gewässer ist, insbesondere ein Teich, ein Kanal oder ein Rückhaltebecken für Regen oder Hochwasser.

12. Mikroflotationsanlage nach einem der Ansprüche 1 bis 11, **dadurch gekennzeichnet, dass** die Mikroflotationsanlage ein Positionsüberwachungssystem und einen Fahrantrieb sowie eine mit beiden verbundene Steuerung aufweist, die dazu ausgebildet ist, die Mikroflotationsanlage für einen ersten vorgegebenen Zeitraum an einer ersten Position zu halten, anschließend an eine zweite Position zu bewegen und dort für einen zweiten vorgegebenen Zeitraum zu halten.

## Claims

1. A microflotation system, comprising:
• an apparatus for producing pressurized water (26),
• an expansion valve (28) arranged at a predefined water depth,
• a pressurized water line (30) that connects the apparatus for producing pressurized water (26) to the expansion valve (28),
• a floating body (16), and
• a supporting structure (18) which is connected to the floating body and maintains the expansion valve (28) at a predefined water depth, wherein
• the microflotation system is intended to treat a body of water, **characterized in that**
• the microflotation system has a microbubble stabilization zone (42) arranged downstream of the expansion valve (28) which is delimited from the surrounding body of water by a base wall (36) and a circumferential side wall (38) connected thereto.

2. The microflotation system according to Claim 1, **characterized in that** the microbubble stabilization zone (42) has a diameter which is ten times an inner diameter of the pressurized water line (30) or more.

3. The microflotation system according to Claim 1 or 2, **characterized in that** the side wall (38) have an upper edge which is arranged at a predefined water depth above the expansion valve (28).

4. The microflotation system according to any one of Claims 1 to 3, **characterized in that** the expansion valve (28) has an outlet opening (34) which is arranged on an upper side of the base wall (36).

5. The microflotation system according to any one of Claims 1 to 4, **characterized in that** at least one supply opening (46) is configured in the base wall (36) and/or in the side wall (38), through which water can flow into the microbubble stabilization zone (42).

6. The microflotation system according to Claim 5, **characterized in that** several of the supply openings (46) are configured in the base wall (36).

7. The microflotation system according to Claim 5 or 6, **characterized in that** a size of the at least one supply opening (46) and/or a number of opened supply openings (46) can be adjusted.

8. The microflotation system according to any one of Claims 1 to 7, **characterized in that** a baffle plate (40) is arranged in the microbubble stabilization zone (42) above the base wall (36).

9. The microflotation system according to Claim 8, **characterized in that** a distance between the baffle plate (40) and the base wall (36) is 50% or less of a height of the side wall (38).

10. The microflotation system according to any one of Claims 1 to 9, **characterized in that** the body of water is a natural body of water, in particular a lake, a river or a sea.

11. The microflotation system according to any one of Claims 1 to 9, **characterized in that** the body of water is an artificial body of water, in particular a pond, a canal or a retention basin for rain or flood waters.

12. The microflotation system according to any one of Claims 1 to 11, **characterized in that** the microflotation system has a position monitoring system and a travel drive as well as a controller connected to both, which is configured to maintain the microflotation system in a first position for a first predefined period of time, to subsequently move it to a second position and maintain it there for a second predefined period of time.

## Revendications

1. Installation de microflottation comprenant :
• un système de production d'eau pressurisée (26),
• une soupape de détente (28) disposée à une profondeur d'eau prédéfinie,
• une conduite d'eau pressurisée (30) reliant le système de production d'eau pressurisée (26) à la soupape de détente (28),
• un corps flottant (16), et
• une structure porteuse (18) reliée au corps flottant et maintenant la soupape de détente (28) à une profondeur d'eau prédéfinie,
• l'installation de microflottation est destinée au traitement d'un milieu aquatique, **caractérisée en ce que**
• l'installation de microflottation présente une zone de stabilisation de microbulles (42) disposée en aval de la soupape de détente (28), laquelle est séparée du milieu aquatique environnant par une paroi de fond (36) et une paroi latérale circonférentielle (38) reliée à celle-ci.

2. Installation de microflottation selon la revendication 1, **caractérisée en ce que** la zone de stabilisation de microbulles (42) présente un diamètre mesurant dix fois un diamètre intérieur de la conduite d'eau pressurisée (30) ou plus.

3. Installation de microflottation selon la revendication 1 ou 2, **caractérisée en ce que** la paroi latérale (38) présente un bord supérieur disposée à une profondeur d'eau prédéfinie au-dessus de la soupape de détente (28).

4. Installation de microflottation selon l'une des revendications 1 à 3, **caractérisée en ce que** la soupape de détente (28) présente une ouverture de sortie (34) disposée sur un côté supérieur de la paroi de fond (36).

5. Installation de microflottation selon l'une des revendications 1 à 4, **caractérisée en ce qu'**au moins une ouverture d'arrivée (46) par laquelle les eaux peuvent s'écouler dans la zone de stabilisation de microbulles (42) est formée dans la paroi de fond (36) et/ou dans la paroi latérale (38).

6. Installation de microflottation selon la revendication 5, **caractérisée en ce que** plusieurs ouvertures d'arrivée (46) sont formées dans la paroi de fond (36).

7. Installation de microflottation selon la revendication 5 ou 6, **caractérisée en ce qu'**une taille de l'au moins une ouverture d'arrivée (46) et/ou un nombre d'ouvertures d'arrivée ouvertes (46) sont réglables.

8. Installation de microflottation selon l'une des revendications 1 à 7, **caractérisée en ce qu'**un déflecteur (40) est disposé au-dessus de la paroi de fond (36) dans la zone de stabilisation de microbulles (42).

9. Installation de microflottation selon la revendication 8, **caractérisée en ce qu'**une distance entre le déflecteur (40) et la paroi de fond (36) mesure 50% ou moins d'une hauteur de la paroi latérale (38).

10. Installation de microflottation selon l'une des revendications 1 à 9, **caractérisée en ce que** le milieu aquatique est un milieu aquatique naturel, en particulier un lac, un fleuve ou une mer.

11. Installation de microflottation selon l'une des revendications 1 à 9, **caractérisée en ce que** le milieu aquatique est un milieu aquatique artificiel, en particulier un étang, un canal ou un bassin de rétention pour la pluie ou les crues.

12. Installation de microflottation selon l'une des revendications 1 à 11, **caractérisée en ce que** l'installation de microflottation présente un système de surveillance de position et un mécanisme de propulsion ainsi qu'une commande reliée à ceux-ci, laquelle est conçue pour maintenir l'installation de microflottation à une première position pour une durée prédéfinie, puis la déplacer vers une deuxième position et l'y maintenir pour une deuxième durée prédéfinie.
